(19) Europäisches Patentamt
European Patent Office
Office européen des brevets

(11) **EP 4 691 981 A1**

(12) **EUROPEAN PATENT APPLICATION**
published in accordance with Art. 153(4) EPC

(43) Date of publication:
**11.02.2026 Bulletin 2026/07**

(21) Application number: **24778770.8**

(22) Date of filing: **14.02.2024**

(51) International Patent Classification (IPC):
**C01B 33/18** (2006.01)     **H01B 3/12** (2006.01)

(52) Cooperative Patent Classification (CPC):
**C01B 33/18; H01B 3/12**

(86) International application number:
**PCT/JP2024/004935**

(87) International publication number:
**WO 2024/202625 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023059218**

(71) Applicant: **TOKUYAMA CORPORATION
Yamaguchi 745-8648 (JP)**

(72) Inventors:
• **FUJIOKA, Masanari
Shunan-shi, Yamaguchi 745-8648 (JP)**
• **FUKUDA, Kentaro
Shunan-shi, Yamaguchi 745-8648 (JP)**

(74) Representative: **Steffens, Adrian
Boehmert & Boehmert
Anwaltspartnerschaft mbB
Pettenkoferstraße 22
80336 München (DE)**

(54) **HOLLOW SILICA PARTICLES**

(57) An aspect of the present invention provides hollow silica particles that exhibit a suppressed increase in viscosity after kneaded with a resin, have a high strength, and can achieve a good balance between handleability and a function thereof. Hollow silica particles in accordance with an aspect of the present invention have, in a particle size distribution based on volume distribution and measured by a laser diffraction scattering method, at least one peak in a range of not less than 0.1 $\mu$m and not more than 0.5 $\mu$m and at least one peak in a range of more than 0.5 $\mu$m and not more than 5.0 $\mu$m, particles on a side of the at least one peak in the range of 0.1 $\mu$m to 0.5 $\mu$m based on volume distribution accounting for not less than 60% by volume of the hollow silica particles, the hollow silica particles having a maximum particle diameter (D100) of not more than 10 $\mu$m, wherein 0.8<(A/B), where A is an apparent density of the hollow silica particles before kneading with a resin, and B is an apparent density of the hollow silica particles after kneading with the resin.

**EP 4 691 981 A1**

**Description**

Technical Field

The present invention relates to fine hollow silica particles that exhibit a small increase in viscosity when being kneaded with a resin and have a high strength.

Background Art

The hollow silica particles have a smaller specific gravity than that of the solid silica particles, and have characteristics such as a low dielectric constant, a low dielectric dissipation factor, and a low thermoelectric ratio that are derived from their hollow structures. By being mixed with a resin, the hollow silica particles allow the resin to have a light weight, a low dielectric constant, a low dielectric dissipation factor, and a heat insulating property, and the hollow silica particles have been used in a wide range of applications. Specifically, hollow silica particles that are improved in filling properties by having particle diameters with an orderly particle size distribution (for example, see Patent Literature 1) and hollow particles that have a multimodal particle size distribution having two or more peaks, thereby achieving tight adhesion and strength (see, for example, Patent Literature 2) have been reported.

Citation List

[Patent Literature]

[Patent Literature 1]
Japanese Patent Application Publication Tokukai No. 2009-203115
[Patent Literature 2]
Japanese Patent Application Publication Tokukai No. 2019-172474

Summary of Invention

Technical Problem

The hollow silica particles disclosed in Patent Literature 1 which have an orderly particle size distribution have had a problem in handleability, since in kneading with a resin, the viscosity of the resin composition is increased. The hollow silica particles disclosed in Patent Literature 2 which have a multimodality have large particle diameters, and thus when the hollow silica particles are kneaded with a resin, it is difficult to fill a fine space with the resin. Therefore, the hollow silica particles have a limited possible application. Typically, in order to exert a function of the hollow silica particles after kneading with a resin, it is necessary to achieve a good balance between the strength of the particles and the porosity of the particles. However, fine hollow silica particles have a small particle diameter relative to the thickness of their shells, and changing the thickness of the shells for improving the strength of the particles has a large impact on the porosity. Therefore, the fine hollow silica particles are needed to maintain their hollow structures without changing the thickness of the shells.
In view of the background described above, it is an object of the present invention to provide hollow silica particles that exhibit a suppressed increase in viscosity after kneaded with a resin, have a high strength, and can achieve a good balance between handleability and a function thereof.

Solution to Problem

The present inventors conducted diligent study in order to solve the foregoing problem, and found that by preparing multimodal hollow silica particles having a maximum particle diameter equal to or lower than a specific value, it is possible to obtain hollow silica particles that exhibit a suppressed increase in viscosity of a resin composition after kneaded with a resin and have a high strength.
That is, hollow silica particles in accordance with an aspect of the present invention have, in a particle size distribution based on volume distribution and measured by a laser diffraction scattering method, at least one peak in a range of not less than 0.1 $\mu$m and not more than 0.5 $\mu$m and at least one peak in a range of more than 0.5 $\mu$m and not more than 5.0 $\mu$m, particles on a side of the at least one peak in the range of not less than 0.1 $\mu$m and not more than 0.5 $\mu$m based on volume distribution accounting for not less than 60% by volume of the hollow silica particles, the hollow silica particles having a maximum particle diameter (D100) of not more than 10 $\mu$m, wherein 0.8<(A/B), where A is an apparent density of the hollow silica particles before kneading with a resin, and B is an apparent density of the hollow silica particles after kneading with the resin.

Advantageous Effects of Invention

The present invention makes it possible to provide hollow silica particles that exhibit a suppressed increase in viscosity after kneaded with a resin, have a high strength, and achieve a good balance between handleability and a function thereof.

Description of Embodiments

The following description will discuss an embodiment of the present invention in detail. However, the present invention is not limited to the following embodiment.

Hollow silica particles in accordance with the present invention have, in a particle size distribution based on volume distribution and measured by a laser diffraction scattering method, at least one peak in a range of not less than 0.1 $\mu$m and not more than 0.5 $\mu$m and at least one peak in a range of more than 0.5 $\mu$m and not more than 5.0 $\mu$m, particles on a side of the at least one peak in the range of not less than 0.1 $\mu$m and not more than 0.5 $\mu$m based on volume distribution accounting for not less than 60% by volume of the hollow silica particles, the hollow silica particles having a maximum particle diameter (D100) of not more than 10 $\mu$m, wherein 0.8<(A/B), where A is an apparent density of the hollow silica particles before kneading with a resin, and B is an apparent density of the hollow silica particles after kneading with the resin.

In a particle size distribution based on volume distribution, a peak existing in a range of not less than 0.1 $\mu$m and not more than 0.5 $\mu$m is located preferably in 0.2 $\mu$m to 0.48 $\mu$m, more preferably in 0.3 $\mu$m to 0.45 $\mu$m. A peak existing in a range of more than 0.5 $\mu$m and not more than 5.0 $\mu$m is located preferably in 0.8 $\mu$m to 4 $\mu$m, more preferably in 1 $\mu$m to 3 $\mu$m. With the hollow silica particles having a multimodal particle size distribution with such peaks, an increase in viscosity in kneading with a resin is reduced, and a difference between an apparent density of the hollow silica particles after kneading with a resin and an apparent density of the hollow silica particles before kneading with the resin is reduced. The reason for this is not clear, but is presumed as follows. The presence of a peak in a range of not less than 0.1 $\mu$m and not more than 0.5 $\mu$m leads to a distributed pressure in kneading with a resin, thereby improving the strength of the hollow silica particles as a whole. Further, the presence of a peak in a range of more than 0.5 $\mu$m and not more than 5.0 $\mu$m suppresses an increase in viscosity of the hollow silica particles as a whole. For these reasons, in the entire resin composition, an increase in the viscosity thereof is suppressed and the strength thereof is improved.

Presence of a peak at not more than 0.1 $\mu$m is unpreferable because after kneading with a resin, the viscosity of the resin composition is significantly increased, and the porosity inside the hollow silica particles is reduced. Presence of a peak in a range exceeding 5 $\mu$m is unpreferable because it becomes difficult to cause the resin composition to penetrate into a fine gap.

In a particle size distribution of the hollow silica particles of the present invention, when the particle size distribution is measured on the basis of volume distribution by a laser diffraction scattering method, particles on a side of the peak in the range of not less than 0.1 $\mu$m and not more than 0.5 $\mu$m account for not less than 60% by volume. In the particle size distribution, a volume frequency of particles detected is measured for each particle diameter. Therefore, assuming that one particle diameter is selected, in comparison between the volume frequency at the selected particle diameter and the volume frequencies at the particle diameters measured therearound, in a case where the volume frequency at the selected particle diameter is larger than the volume frequencies at the particle diameters measured therearound, it can be determined that a peak at the selected particle diameter is present. This enables determination of a position of a peak in the particle size distribution measured, and thus a position of the peak at the largest particle diameter in the range of not less than 0.1 $\mu$m and not more than 0.5 $\mu$m and a position of the peak at the smallest particle diameter in the range of more than 0.5 $\mu$m and not more than 5.0 $\mu$m are specified. Thereafter, the particle diameter with the smallest volume frequency between the specified peaks is set as a boundary value. The particles on a side of the peak in the range of not less than 0.1 $\mu$m and not more than 0.5 $\mu$m refers to a cumulative value of volume frequencies at particle diameters existing in a range of 0 $\mu$m to not more than the boundary value.

When the particles on a side of the peak in the range of not less than 0.1 $\mu$m and not more than 0.5 $\mu$m account for less than 60% by volume, it becomes difficult to cause the resin composition to penetrate into a fine gap, and thus it is unpreferable. In contrast, setting this value to be small to some degree further improves the function exerted by having a multimodal particle size distribution, thereby making it possible to further improve a viscosity exhibited after kneading with a resin. From a viewpoint of the balance as described above, the value is preferably 60% by volume to 95% by volume, more preferably 65% by volume to 90% by volume, and further more preferably 70% to 85%.

The maximum particle diameter (D100) of the hollow silica particles of the present invention is not more than 10 $\mu$m, preferably not more than 9 $\mu$m from a viewpoint of a filling property for penetration of the resin composition into a fine gap. The maximum particle diameter (D100) of the hollow silica particles can be measured by, for example, a method described in Examples.

It is preferable that the shells of the hollow silica particles of the present invention be not fractured even after kneaded with a resin and the resin do not penetrate into the insides of the holes, that is, the hollow structures be successfully maintained. Specifically, in comparison between an apparent density (A) of hollow silica particles before kneading with a resin and an apparent density (B) of the hollow silica particles into which the apparent density of the composition after kneading with the resin is converted, a density difference (A/B) therebetween exceeds 0.8, that is, 0.8<(A/B). Because more hollow silica particles with their hollow structures successfully maintained leads to stronger hollow structure-derived characteristics exerted, preferably 0.85<(A/B), more preferably 0.9<(A/B).

The hollow silica particles of the present invention have a reduced dielectric constant and a reduced dielectric dissipation factor due to their characteristics, compared with the solid silica particles.

The dielectric constant of the hollow silica particles is, at a frequency of 10 GHz, preferably not more than 2.0, preferably not more than 1.8, more preferably not more than 1.7.

The dielectric dissipation factor of the hollow silica particles is, at a frequency of 10 GHz, preferably not more than 0.003, more preferably not more than 0.002, further more preferably not more than 0.001.

Measurement of the dielectric constant and dielectric dissipation factor can be carried out with use of, for example, a cavity resonator method.

The hollow silica particles of the present invention are excellent in strength due to their characteristics. The particle strength of the hollow silica particles is preferably not less than 50 MPa, more preferably not less than 55 MPa. The particle strength can be measured by, for example, a method described in Examples.

The hollow silica particles of the present invention can be manufactured by, for example, a sol-gel method, although there is no particular limitation, provided that the above characteristics are satisfied.

The hollow silica particles of the present invention, which have a multimodal particle size distribution, may be achieved by mixing separately manufactured hollow silica particles or by preparing hollow silica particles having a multimodal particle size distribution at a time. It is also possible to carry out a classification operation on manufactured particles to adjust the particle size distribution.

The hollow silica particles of the present invention are particles each having a hole inside the particle and a shell part separating the hole and the outside, and are different from porous silica.

As understood from the above descriptions, the present invention encompasses the following Aspects 1 to 3.

Aspect 1: Hollow silica particles having, in a particle size distribution based on volume distribution and measured by a laser diffraction scattering method, at least one peak in a range of not less than 0.1 $\mu$m and not more than 0.5 $\mu$m and at least one peak in a range of more than 0.5 $\mu$m and not more than 5.0 $\mu$m, particles on a side of the at least one peak in the range of not less than 0.1 $\mu$m and not more than 0.5 $\mu$m based on volume distribution accounting for not less than 60% by volume of the hollow silica particles, the hollow silica particles having a maximum particle diameter (D100) of not more than 10 $\mu$m, wherein 0.8<(A/B), where A is an apparent density of the hollow silica particles before kneading with a resin, and B is an apparent density of the hollow silica particles after kneading with the resin.

Aspect 2: The hollow silica particles in accordance with Aspect 1, having a dielectric constant of not more than 2.0 and a dielectric dissipation factor of not more than 0.003.

Aspect 3: The hollow silica particles in accordance with Aspect 1 or 2, having a particle strength of not less than 50 MPa.

Examples

<Manufacture of hollow silica particles having at least one peak in range of 0.1 $\mu$m to 0.5 $\mu$m>

(1) Hollow silica particles A1

Into a 500-mL flask, 100 g of methanol (manufactured by FUJIFILM Wako Pure Chemical Corporation; Wako 1st Grade), 1.7g of dodecyl trimethylammonium chloride (manufactured by Tokyo Chemical Industry Co., Ltd.), and 1 g of dodecane (manufactured by FUJIFILM Wako Pure Chemical Corporation) were introduced and were stirred to prepare a liquid A. Into a 500-mL flask, 300 g of water and 0.825 g of 25% tetramethylammonium hydroxide aqueous solution (manufactured by Wako Pure Chemical Industries, Ltd.) were introduced and were stirred to prepare a liquid B.

The liquid B was added to the liquid A thus obtained while stirring the liquid A at 25°C, followed by adding 1.7g of tetramethoxysilane (manufactured by TAMA CHEMICALS CO., LTD.), and the mixture was stirred for 5 hours at 25°C. The hollow silica particle precursor dispersion liquid thus obtained was filtered with use of 5C filter paper and washed with water three times to collect the hollow silica particle precursor.

The collected hollow silica particle precursor was dried with use of a forced -convection drying oven (Convection Oven, manufactured by SANYO Electric Co., Ltd.) at 100°C for 12 hours to obtain a hollow silica particle precursor which was white powder.

The white powder thus obtained was heated to 1000°C at a rate of 1 °C/min with use of an electric furnace (FO810, manufactured by Yamato Scientific Co., Ltd.) and was fired at 1000°C for 10 hours to obtain hollow silica particles A1 having a particle size distribution in which a peak is located at 0.4 $\mu$m.

(2) Hollow silica particles A2

Into a 500-mL flask, 100 g of methanol (manufactured by FUJIFILM Wako Pure Chemical Corporation; Wako 1st Grade), 0.9 g of dodecyl trimethylammonium chloride (manufactured by Tokyo Chemical Industry Co., Ltd.), and 0.5 g of dodecane (manufactured by FUJIFILM Wako Pure Chemical Corporation) were introduced and were stirred to prepare a liquid A. Into a 500-mL flask, 300 g of water and 0.413 g of 25% tetramethylammonium hydroxide aqueous solution (manufactured by Wako Pure Chemical Industries, Ltd.) were introduced and were stirred to prepare a liquid B.

The liquid B was added to the liquid A thus obtained while stirring the liquid A at 25°C, followed by adding 0.9 g of tetramethoxysilane (manufactured by TAMA CHEMICALS CO., LTD.), and the mixture was stirred for 5 hours at 25°C. The hollow silica particle precursor dispersion liquid thus obtained was filtered with use of 5C filter paper and washed with water three times to collect the hollow silica particle precursor.

The collected hollow silica particle precursor was dried with use of a forced -convection drying oven (Convection Oven, manufactured by SANYO Electric Co., Ltd.) at 100°C for 12 hours to obtain a hollow silica particle precursor which was white powder.

The white powder thus obtained was heated to 1000°C at a rate of 1 °C/min with use of an electric furnace (FO810, manufactured by Yamato Scientific Co., Ltd.) and was fired at 1000°C for 10 hours to obtain hollow silica particles A2 having a particle size distribution in which a peak is located at 0.2 $\mu$m.

(3) Hollow silica particles A3

Into a 500-mL flask, 100 g of methanol (manufactured by FUJIFILM Wako Pure Chemical Corporation; Wako 1st Grade), 1.4 g of dodecyl trimethylammonium chloride (manufactured by Tokyo Chemical Industry Co., Ltd.), and 0.8 g of dodecane (manufactured by FUJIFILM Wako Pure Chemical Corporation) were introduced and were stirred to prepare a liquid A. Into a 500-mL flask, 300 g of water and 0.620 g of 25% tetramethylammonium hydroxide aqueous solution (manufactured by Wako Pure Chemical Industries, Ltd.) were introduced and were stirred to prepare a liquid B.

The liquid B was added to the liquid A thus obtained while stirring the liquid A at 25°C, followed by adding 1.4 g of tetramethoxysilane (manufactured by TAMA CHEMICALS CO., LTD.), and the mixture was stirred for 5 hours at 25°C. The hollow silica particle precursor dispersion liquid thus obtained was filtered with use of 5C filter paper and washed with water three times to collect the hollow silica particle precursor.

The collected hollow silica particle precursor was dried with use of a forced -convection drying oven (Convection Oven, manufactured by SANYO Electric Co., Ltd.) at 100°C for 12 hours to obtain a hollow silica particle precursor which was white powder.

The white powder thus obtained was heated to 1000°C at a rate of 1 °C/min with use of an electric furnace (FO810, manufactured by Yamato Scientific Co., Ltd.) and was fired at 1000°C for 10 hours to obtain hollow silica particles A3 having a particle size distribution in which a peak is located at 0.3 $\mu$m.

<Manufacture of hollow silica particles having at least one peak in range of 0.5 $\mu$m to 5 $\mu$m>

(1) Hollow silica particles B1

In a 200-ml flask, 1.3 g of hydroxy propyl cellulose (manufactured by Sigma-Aldrich; average molecular weight of approximately 370000) was added to 86 g of 1-octanol (JUNSEI CHEMICAL CO., LTD.; Guaranteed Reagent), and the liquid was heated to a temperature of 80°C and was stirred for 4 hours. Thereafter, the liquid was cooled to a temperature of 40°C, and 2.7 g of sorbitan monooleate (Span 80, manufactured by Sigma-Aldrich) was added to prepare a liquid A.

Further, in a 20-mL snap-capped cup, 0.6 g of polyethylene glycol (Polyethylene glycol 20000, manufactured by JUNSEI CHEMICAL CO., LTD.) and 0.5 g of polyethylene glycol sorbitan monolaurate (Tween 20, manufactured by Sigma-Aldrich) were added to 8.1 g of water and were stirred for 20 minutes. Thereafter, 0.8 g of 25% ammonia water (manufactured by FUJIFILM Wako Pure Chemical Corporation; Wako 1st Grade) was added to prepare a liquid B.

Thereafter, the liquid B was added to the liquid A whose temperature was adjusted to 40°C while stirring the liquid A, and the mixture was then continuously stirred for 1 hour to prepare a liquid C.

Further, 20 g of tetraethoxysilane (manufactured by FUJIFILM Wako Pure Chemical Corporation; Wako Special Grade; tetramethyl orthosilicate) was added to the liquid C while stirring the liquid C and was stirred for 14 hours to obtain a hollow silica particle precursor dispersion liquid. The hollow silica precursor dispersion liquid was filtered with use of 5C filter paper and washed with ethanol (manufactured by FUJIFILM Wako Pure Chemical Corporation; Wako 1st Grade) three times to collect the hollow silica particle precursor.

The collected hollow silica particle precursor was dried with use of a forced -convection drying oven (Convection Oven, manufactured by SANYO Electric Co., Ltd.) at 130°C for 12 hours to obtain a hollow silica particle precursor which was white powder.

The white powder thus obtained was heated to 1000°C at a rate of 100 °C/hour with use of an electric furnace (FO810, manufactured by Yamato Scientific Co., Ltd.) and was fired at 1000°C for 10 hours to obtain hollow silica B1 having a particle size distribution in which a peak is located at 1.7 $\mu$m.

(2) Hollow silica particles B2

In a 200-ml flask, 1.3 g of hydroxy propyl cellulose (manufactured by Sigma-Aldrich; average molecular weight of approximately 370000) was added to 86 g of 1-octanol (JUNSEI CHEMICAL CO., LTD.; Guaranteed Reagent), and the liquid was heated to a temperature of 80°C and was stirred for 4 hours. Thereafter, the liquid was cooled to a temperature of 40°C, and 1.5 g of sorbitan monooleate (Span 80, manufactured by Sigma-Aldrich) was added to prepare a liquid A.

Further, in a 20-mL snap-capped cup, 0.6 g of polyethylene glycol (Polyethylene glycol 20000, manufactured by JUNSEI CHEMICAL CO., LTD.) and 0.3 g of polyethylene glycol sorbitan monolaurate (Tween 20, manufactured by Sigma-Aldrich) were added to 8.1 g of water and were stirred for 20 minutes. Thereafter, 0.8 g of 25% ammonia water (manufactured by FUJIFILM Wako Pure Chemical Corporation; Wako 1st Grade) was added to prepare a liquid B.

Thereafter, the liquid B was added to the liquid A whose temperature was adjusted to 40°C while stirring the liquid A, and the mixture was then continuously stirred for 1 hour to prepare a liquid C.

Further, 20 g of tetraethoxysilane (manufactured by FUJIFILM Wako Pure Chemical Corporation; Wako Special Grade; tetramethyl orthosilicate) was added to the liquid C while stirring the liquid C and was stirred for 14 hours to obtain a hollow silica particle precursor dispersion liquid. The hollow silica precursor dispersion liquid was filtered with use of 5C filter paper and washed with ethanol (manufactured by FUJIFILM Wako Pure Chemical Corporation; Wako 1st Grade) three times to collect the hollow silica particle precursor.

The collected hollow silica particle precursor was dried with use of a forced -convection drying oven (Convection Oven, manufactured by SANYO Electric Co., Ltd.) at 130°C for 12 hours to obtain a hollow silica particle precursor which was white powder.

The white powder thus obtained was heated to 1000°C at a rate of 100 °C/hour with use of an electric furnace (FO810, manufactured by Yamato Scientific Co., Ltd.) and was fired at 1000°C for 10 hours to obtain hollow silica B2 having a particle size distribution in which a peak is located at 3.0 $\mu$m.

(3) Hollow silica particles B3

In a 200-ml flask, 1.3 g of hydroxy propyl cellulose (manufactured by Sigma-Aldrich; average molecular weight of approximately 370000) was added to 86 g of 1-octanol (JUNSEI CHEMICAL CO., LTD.; Guaranteed Reagent), and the liquid was heated to a temperature of 80°C and was stirred for 4 hours. Thereafter, the liquid was cooled to a temperature of 40°C, and 1.0 g of sorbitan monooleate (Span 80, manufactured by Sigma-Aldrich) was added to prepare a liquid A.

Further, in a 20-mL snap-capped cup, 0.6 g of polyethylene glycol (Polyethylene glycol 20000, manufactured by JUNSEI CHEMICAL CO., LTD.) and 0.2 g of polyethylene glycol sorbitan monolaurate (Tween 20, manufactured by Sigma-Aldrich) were added to 8.1 g of water and were stirred for 20 minutes. Thereafter, 0.8 g of 25% ammonia water (manufactured by FUJIFILM Wako Pure Chemical Corporation; Wako 1st Grade) was added to prepare a liquid B.

Thereafter, the liquid B was added to the liquid A whose temperature was adjusted to 40°C while stirring the liquid A, and the mixture was then continuously stirred for 1 hour to prepare a liquid C.

Further, 20 g of tetraethoxysilane (manufactured by FUJIFILM Wako Pure Chemical Corporation; Wako Special Grade; tetramethyl orthosilicate) was added to the liquid C while stirring the liquid C and was stirred for 14 hours to obtain a hollow silica particle precursor dispersion liquid. The hollow silica precursor dispersion liquid was filtered with use of 5C filter paper and washed with ethanol (manufactured by FUJIFILM Wako Pure Chemical Corporation; Wako 1st Grade) three times to collect the hollow silica particle precursor.

The collected hollow silica particle precursor was dried with use of a forced -convection drying oven (Convection Oven, manufactured by SANYO Electric Co., Ltd.) at 130°C for 12 hours to obtain a hollow silica particle precursor which was white powder.

The white powder thus obtained was heated to 1000°C at a rate of 100 °C/hour with use of an electric furnace (FO810, manufactured by Yamato Scientific Co., Ltd.) and was fired at 1000°C for 10 hours to obtain hollow silica B3 having a particle size distribution in which a peak is located at 4.6 $\mu$m.

The physical properties of the hollow silica particles were evaluated by a method as follows.

(1) Volume-based particle size distribution by laser diffraction scattering method

With use of an electronic scale, 0.1 g of hollow silica particles were weighed out into a 50-mL glass bottle, and 40 mL of ethanol was added, followed by dispersing the hollow silica particles with use of an ultrasonic homogenizer (Sonifier 250, manufactured by BRANSON) under conditions of 60 W and 2 minutes. Subsequently, a volume-based mode diameter ($\mu$m) and a maximum particle diameter (D100)($\mu$m) were measured with use of a laser diffraction scattering method-based particle size distribution measurement device (LS 13 320, manufactured by Beckman Coulter, Inc.). At this time, the refractive index of the dispersion medium was set to 1.36 and the refractive index of the measurement target was set to 1.45. The largest one of the particle diameters of the particles detected by the laser diffraction scattering method-based particle size distribution measurement device used was employed as the maximum particle diameter (D100).

(2) Apparent density of hollow silica particles before kneading with resin

The hollow silica particles that had been dried under reduced pressure at 110°C for 24 hours were weighed out up to a unit of 0.001 g into a 10-ml sample container. Subsequently, the sample container was set in a measurement chamber of an automatic dry densimeter (dry AccuPyc 1330, manufactured by Shimadzu Corporation), and then the particle density was measured at a measurement temperature of 25°C while causing nitrogen gas to flow into the measurement chamber. With the dry automatic densimeter, the mass of the powder used for measurement was inputted thereto, and a particle density represented by g/cm$^3$ was displayed up to five decimal places in units of g/cm$^3$. A value obtained by rounding the second decimal place of the particle density was used as a particle density.

(3) Particle strength

The hollow silica particles were dispersed in ethanol so that a concentration was 0.02% by mass, and one drop thereof was placed onto a lower pressure plate of a microcompression tester (MZCT-W510-J, manufactured by Shimadzu Corporation) and was dried. A load was applied to one particle on the lower pressure plate with use of an upper pressure indenter (a flat indenter, made of diamond) having a diameter of 20 $\mu$m, and an amount of deformation of the particle was automatically measured. Measurement was carried out with use of a test force P (N) that was obtained when the particle was fractured and a diameter Z (mm) of the measured particle. Five particles were randomly selected and measured with use of a microscope attached to the tester, and an average value thereof was used to calculate a particle strength (MPa) according to the following formula:

$$\text{Particle strength (MPa)} = 2.8 \times P/\pi/Z^2$$

Subsequent analyzation was carried out on resin compositions prepared by a method described in Examples. A resin and a curing agent in the resin composition react after kneading to form a uniform resin, and thus a resin and a curing agent were kneaded at a composition ratio of 71:29. A cured composition was measured, and a value from the measurement was used.

(4) Viscosity measurement

A viscosity of 0.2 g of the resin composition was measured with use of a rheometer (HAAKE MARS40, manufactured by Thermo Fisher Scientific Inc.). The measurement was carried out at 25°C with use of C35/1 (cone plate type, diameter: 35mm, angle: 1 degree, material: titanium) as a sensor. A value at a shear rate of $1s^{-1}$ was used as a viscosity.

(5) Measurement of dielectric constant and dielectric dissipation factor

The resin composition was introduced into a SUS mold having a thickness of 0.4 mm, a short side of 60 mm, and a long side of 70 mm, and was heated with use of a forced-convection oven (DNK302, manufactured by Yamato Scientific Co., Ltd.) at 80°C for 1 hour, followed by being further heated at 120°C for 3 hours. A dielectric constant and a dielectric dissipation factor of the resin composition thus cured were measured with use of a network analyzer (N5209A, manufactured by Keysight technologies, Inc.). The measurement was carried out at a measurement frequency of 10 GHz.

Thereafter, the physical properties of the hollow silica particles were calculated according to the Bruggeman's formula shown below.

$$0 = \Phi_a \frac{\varepsilon_a - \varepsilon_c}{\varepsilon_a + 2\varepsilon_c} + \Phi_b \frac{\varepsilon_b - \varepsilon_c}{\varepsilon_b + 2\varepsilon_c}$$

In the formula, $\Phi_a$ represents a volume fraction of the resin and the curing agent in the resin composition; $\Phi_b$ represents a volume fraction of the hollow silica particles in the resin composition; $\varepsilon_a$ represents a dielectric constant of the resin and the curing agent; $\varepsilon_b$ represents a dielectric constant of the hollow silica particles; and $\varepsilon_c$ represents a dielectric constant of the resin composition.

(6) Apparent density of hollow silica particles after kneading with resin

The resin composition was introduced into a Teflon (registered trademark) mold having a thickness of 5 mm, a short side of 10 mm, and a long side of 15 mm, and was heated in a forced-convection oven (DNK302, manufactured by Yamato Scientific Co., Ltd.) at 80°C for 1 hour, followed by being further heated at 120°C for 3 hours. A density of the resin composition thus cured was measured with use of an accurate electric densimeter (SD-200L, manufactured by Alfa Mirage, co., ltd.).
The true density of the epoxy resin and curing agent used, and the composition ratio of the resin composition were converted into an apparent density of the hollow silica particles that had been kneaded with the resin. As the true density of the resin and curing agent, 1.18 g/cm$^3$ was used.

Apparent density of hollow silica particles after kneading with resin = composition ratio of hollow silica particles/{(1/ measurement value) - (total of composition ratio of resin and curing agent/1.18)}

[Table 1]

| | | Example 1 | Example 2 | Example 3 | Example 4 | Example 5 |
|---|---|---|---|---|---|---|
| Hollow silica A1 | % by mass | 91 | 86 | 69 | 72 | 78 |
| | % by volume | 90 | 70 | 60 | 60 | 60 |
| Hollow silica A2 | % by mass | 0 | 0 | 0 | 0 | 0 |
| | % by volume | 0 | 0 | 0 | 0 | 0 |
| Hollow silica A3 | % by mass | 0 | 0 | 0 | 0 | 0 |
| | % by volume | 0 | 0 | 0 | 0 | 0 |
| Hollow silica B1 | % by mass | 9 | 14 | 31 | 0 | 0 |
| | % by volume | 10 | 30 | 40 | 0 | 0 |
| Hollow silica B2 | % by mass | 0 | 0 | 0 | 28 | 0 |
| | % by volume | 0 | 0 | 0 | 40 | 0 |
| Hollow silica B3 | % by mass | 0 | 0 | 0 | 0 | 22 |
| | % by volume | 0 | 0 | 0 | 0 | 40 |

8

(continued)

|  |  | Example 1 | Example 2 | Example 3 | Example 4 | Example 5 |
|---|---|---|---|---|---|---|
| Particles on side of peak of 0.1 μm or more and 0.5 μm or less based on volume distribution | % by volume | 90 | 70 | 60 | 60 | 60 |
| Resin | % by mass | 214 | 214 | 214 | 214 | 214 |
| Curing agent | % by mass | 86 | 86 | 86 | 86 | 86 |
| Viscosity | Pa·s | 106 | 65 | 52 | 61 | 68 |
| Mode diameter | μm | 0.4 | 0.4 | 0.4 | 0.4 | 0.4 |
| Maximum particle diameter | μm | 2.9 | 2.9 | 2.9 | 5.1 | 8.6 |
| Dielectric constant |  | 1.9 | 1.9 | 1.8 | 1.8 | 1.8 |
| Dielectric dissipation factor |  | 0.0008 | 0.0008 | 0.0008 | 0.0008 | 0.0008 |
| Pre-kneading apparent density A | g/cm$^3$ | 1.07 | 1.02 | 0.99 | 0.91 | 0.84 |
| Post-kneading apparent density B | g/cm$^3$ | 1.08 | 1.13 | 1.04 | 1.04 | 1.04 |
| Density difference A/B | % | 99 | 90 | 95 | 88 | 81 |
| Particle strength | MPa | 56 | 53 | 54 | 53 | 50 |

[Table 2]

|  |  | Example 6 | Example 7 | Example 8 | Comparative Example 1 | Comparative Example 2 |
|---|---|---|---|---|---|---|
| Hollow silica A1 | % by mass | 0 | 0 | 0 | 100 | 0 |
| | % by volume | 0 | 0 | 0 | 100 | 0 |
| Hollow silica A2 | % by mass | 72 | 0 | 0 | 0 | 0 |
| | % by volume | 60 | 0 | 0 | 0 | 0 |
| Hollow silica A3 | % by mass | 0 | 67 | 78 | 0 | 0 |
| | % by volume | 0 | 60 | 60 | 0 | 0 |
| Hollow silica B1 | % by mass | 0 | 33 | 0 | 0 | 100 |
| | % by volume | 0 | 40 | 0 | 0 | 100 |
| Hollow silica B2 | % by mass | 28 | 0 | 0 | 0 | 0 |
| | % by volume | 40 | 0 | 0 | 0 | 0 |

(continued)

| | | Example 6 | Example 7 | Example 8 | Comparative Example 1 | Comparative Example 2 |
|---|---|---|---|---|---|---|
| Hollow silica B3 | % by mass | 0 | 0 | 22 | 0 | 0 |
| | % by volume | 0 | 0 | 40 | 0 | 0 |
| Particles on side of peak of 0.1 $\mu$m or more and 0.5 $\mu$m or less based on volume distribution | % by volume | 60 | 60 | 60 | 100 | 0 |
| Resin | % by mass | 214 | 214 | 214 | 214 | 214 |
| Curing agent | % by mass | 86 | 86 | 86 | 86 | 86 |
| Viscosity | Pa · s | 67 | 48 | 45 | Unmeasurable | 117 |
| Mode diameter | $\mu$m | 0.2 | 0.3 | 0.3 | 0.3 | 1.7 |
| Maximum particle diameter | $\mu$m | 5.1 | 2.9 | 8.9 | 0.8 | 2.9 |
| Dielectric constant | | 1.8 | 1.9 | 1.8 | 1.9 | 3.2 |
| Dielectric dissipation factor | | 0.0009 | 0.0009 | 0.0009 | 0.0006 | 0.0037 |
| Pre-kneading apparent density A | g/cm$^3$ | 0.94 | 1.00 | 0.86 | 1.09 | 0.84 |
| Post-kneading apparent density B | g/cm$^3$ | 1.04 | 1.10 | 1.04 | 1.10 | 1.88 |
| Density difference A/B | % | 90 | 91 | 82 | 99 | 45 |
| Particle strength | MPa | 53 | 54 | 52 | 61 | 25 |

(Examples 1 to 8 and Comparative Examples 1 and 2)

At each ratio shown in Tables 1 and 2, 5.0 g of the hollow silica particles A and the hollow silica particles B in total, 10.7 g of bisphenol F-type epoxy resin (YDF-8170, manufactured by NIPPON STEEL CHEMICAL & MATERIAL CO., LTD.), and 4.3 g of a curing agent (KARAHARD A-A, manufactured by Nippon Kayaku Co., Ltd.) were kneaded by hand. The resin composition was then pre-kneaded with use of a rotation-revolution mixer (Awatori Rentaro AR-500, manufactured by THINKY CORPORATION) (kneading: 1000 rpm and 8 minutes, defoaming: 2000 rpm and 2 minutes). The resin composition thus pre-kneaded was stored in a constant temperature water bath at 25°C and then was kneaded with use of a three roll mill (BR-150HCV, manufactured by AIMEX CO., LTD.; roll diameter of $\varphi$63.5). The kneading was performed under the conditions that a kneading temperature was 25°C, a roll-to-roll distance was 20 $\mu$m, and the number of times of kneading was eight times. The resin composition thus obtained was defoamed for 30 minutes under reduced pressure with use of a vacuum pump (TSW-150, manufactured by SATO VAC INC.). The results are shown in Tables 1 and 2.

Tables 1 and 2 indicate that resin compositions of Examples 1 to 8 containing the hollow silica particles of the present invention had a low viscosity and a high strength, and thus exhibited a small density difference, and exhibited a low dielectric constant and a low dielectric dissipation factor. In Comparative Example 1, since the viscosity of the resin composition was too high, it was impossible to measure the viscosity.

**Claims**

1. Hollow silica particles having, in a particle size distribution based on volume distribution and measured by a laser diffraction scattering method, at least one peak in a range of not less than 0.1 $\mu$m and not more than 0.5 $\mu$m and at least one peak in a range of more than 0.5 $\mu$m and not more than 5.0 $\mu$m,

- particles on a side of the at least one peak in the range of not less than 0.1 $\mu$m and not more than 0.5 $\mu$m based on volume distribution accounting for not less than 60% by volume of the hollow silica particles,
- the hollow silica particles having a maximum particle diameter (D100) of not more than 10 $\mu$m, wherein
- 0.8<(A/B), where A is an apparent density of the hollow silica particles before kneading with a resin, and B is an apparent density of the hollow silica particles after kneading with the resin.

2. The hollow silica particles according to claim 1, having a dielectric constant of not more than 2.0 and a dielectric dissipation factor of not more than 0.003.

3. The hollow silica particles according to claim 1 or 2, having a particle strength of not less than 50 MPa.

## INTERNATIONAL SEARCH REPORT

| International application No. |
|---|
| **PCT/JP2024/004935** |

| A. | CLASSIFICATION OF SUBJECT MATTER |
|---|---|

*C01B 33/18*(2006.01)i; *H01B 3/12*(2006.01)i
FI:   C01B33/18 Z; H01B3/12 306D

According to International Patent Classification (IPC) or to both national classification and IPC

| B. | FIELDS SEARCHED |
|---|---|

Minimum documentation searched (classification system followed by classification symbols)

C01B33/18; H01B3/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2019-172474 A (TAIHEIYO CEMENT CORP.) 10 October 2019 (2019-10-10) entire text | 1-3 |
| A | JP 2017-31235 A (TAIHEIYO CEMENT CORP.) 09 February 2017 (2017-02-09) entire text | 1-3 |
| A | WO 2017/022175 A1 (PANASONIC INTELLECTUAL PROPERTY MANAGEMENT CO., LTD.) 09 February 2017 (2017-02-09) entire text | 1-3 |
| A | JP 2017-109898 A (KAO CORPORATION) 22 June 2017 (2017-06-22) entire text | 1-3 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 April 2024** | **07 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/004935**

| Patent document cited in search report | | | Publication date (day/month/year) | Patent family member(s) | | | Publication date (day/month/year) |
|---|---|---|---|---|---|---|---|
| JP | 2019-172474 | A | 10 October 2019 | (Family: none) | | | |
| JP | 2017-31235 | A | 09 February 2017 | (Family: none) | | | |
| WO | 2017/022175 | A1 | 09 February 2017 | US entire text | 2017/0158867 | A1 | |
| | | | | EP | 3333598 | A1 | |
| | | | | CN | 106796307 | A | |
| JP | 2017-109898 | A | 22 June 2017 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009203115 A
- JP 2019172474 A